Europäisches Patentamt

European Patent Office

Office européen des brevets

(19)

(11) Veröffentlichungsnummer: **0 011 103**
**B1**

(12)

# EUROPÄISCHE PATENTSCHRIFT

(45) Veröffentlichungstag der Patentschrift:
29.12.82

(51) Int. Cl.³: **C 05 F 9/02**

(21) Anmeldenummer: **79103459.8**

(22) Anmeldetag: **15.09.79**

(54) Verfahren und Anlage zur Herstellung von Kompostmaterial durch aerobe Behandlung und Entseuchung von gemischten Siedlungsabfällen.

(30) Priorität: **12.10.78 DE 2844481**

(43) Veröffentlichungstag der Anmeldung:
**28.05.80 Patentblatt 80/11**

(45) Bekanntmachung des Hinweises auf die Patenterteilung:
**29.12.82 Patentblatt 82/52**

(84) Benannte Vertragsstaaten:
**AT BE CH FR GB IT NL SE**

(56) Entgegenhaltungen:
**BE-A-419 896**
**CH-A-420 224**
**DE-A-2 352 474**
**FR-A-1 583 541**
**FR-A-2 167 146**
**FR-A-2 354 985**
**US-A-1 597 725**

(73) Patentinhaber: **Lindemann Maschinenfabrik GmbH,
Erkrather Strasse 401, D-4000 Düsseldorf 1 (DE)**

(72) Erfinder: **Stodt, Eberhard, Schlesische Strasse 49,
D-4000 Düsseldorf (DE)**
Erfinder: **Kaldenbach, Erwin, Berliner Strasse 58,
D-4030 Ratingen (DE)**

(74) Vertreter: **König, Reimar, Dr.-Ing. et al, Patentanwälte
Dr.-Ing. Reimar König Dipl.-Ing. Klaus Bergen
Cecilienallee 76, D-4000 Düsseldorf 30 (DE)**

## Verfahren und Anlage zur Herstellung von Kompostmaterial durch aerobe Behandlung und Entseuchung von gemischten Siedlungsabfällen

Die Erfindung bezieht sich auf ein Verfahren zur Herstellung von Kompostmaterial durch aerobe Behandlung und Entseuchung von gemischten Siedlungsabfällen, insbesondere auf ein solches, bei dem die Abfälle für eine bestimmte Verweildauer in eine geschlossene, belüftbare Rottehalle eingebracht werden, sowie auf eine Anlage zum Durchführen dieses Verfahrens.

Unter der Bezeichnung »Siedlungsabfälle« werden im vorliegenden Zusammenhang im wesentlichen feste und flüssige Abfälle aus dem häuslichen Bereich verstanden, wobei flüssige Abfälle natürlich nur in Mischung mit den festen Abfällen im Sinne der Erfindung verarbeitet werden können.

Aus der DE-AS 1 592 782 ist eine Anlage bekannt, bei der die zu kompostierenden Abfallstoffe durch eine Einlaß-Öffnung im Dach einer Rottehalle über ein unter der Einlaß-Öffnung angeordnetes Verteilerband auf ein in Fermentierungszellen unterteiltes Trogförderband abgeworfen werden, welches die Rottehalle in der vorbestimmten Rottezeit bis zu einer am anderen Hallenende angeordneten Auslaß-Öffnung kontinuierlich durchläuft. Je nach angewendetem Rotte-Verfahren und je nach erwartetem Verrottungs- bzw. Entseuchungsgrad muß eine Durchlaufdauer der zu kompostierenden Abfallstoffe durch die Rottehalle von 24 Stunden bis zu 20 Tagen und mehr eingestellt werden. Das Kompostieren von Siedlungsabfällen in einer geschlossenen Rottehalle hat bekanntlich neben der Möglichkeit, ein von äußeren Witterungsbedingungen unabhängiges, optimales Klima in der Rottehalle einstellen zu können, auch noch den Vorteil, daß Umweltbelästigungen durch üble Gerüche, sowie Verschleppen von Abfallstoffen durch Vögel und Ratten und eine damit verbundene Ungeziefer-Vermehrung und -Verbreitung völlig vermieden werden können.

Allerdings kann der Aufbau und Betrieb einer derartigen geschlossenen Rotte-Anlage aber auch so kostspielig werden, daß dadurch diese Methode der Abfallbeseitigung wirtschaftlich uninteressant wird, was z. B. bei einer nach der Lehre der DE-AS 1 592 782 im großtechnischen Maßstab aufgebauten Anlage der Fall sein würde. Zur Verarbeitung des kompostierbaren Abfalls (etwa 50% des Siedlungsabfalles ist kompostierbar) von 500 000 Einwohnern, unter der Voraussetzung, daß jährlich etwa 270 kp Abfall pro Einwohner anfallen, und daß zur Erzielung eines ausgereiften Fertigkompostes ein Aufenthalt von mindestens 3 Wochen in der Rottehalle erforderlich ist, benötigt die bekannte Anlage etwa 30 nebeneinander angeordnete Fermentierungszellen mit den in der Auslegeschrift angegebenen Abmessungen von 35 m Länge, 3,50 m Höhe und 3,30 m Breite. Zur Unterbringung einer solchen Anlage ist eine Rottehalle von etwa 150 m Länge, 45 m Breite und 6 bis 7 m Höhe erforderlich. Es versteht sich, daß eine derartige Anlage mit einer Vielzahl an beweglichen Teilen, einschließlich der zahlreichen Antriebe, nicht nur äußerst kostspielig, sondern im Hinblick auf das aggressive Raum-Klima mit einer Temperatur bis zu 70°C, hoher Luftfeuchtigkeit, Ammoniakgasen u. dgl. und die durch das zu verarbeitende Material hervorgerufenen Verunreinigungen auch äußerst störanfällig ist. Aufgrund der vorerwähnten, klimatischen Bedingungen und der außerdem in Bodennähe stets vorhandenen Kohlendioxid-Ansammlung kann Personal nur in Schutzanzügen und mit Atmungsgeräten unter sorgfältige Überwachung Wartungs- und Reparaturarbeiten in der Rottehalle durchführen. Somit sind für die bekannte Anlage nicht nur hohe Anschaffungskosten, sondern auch hohe Betriebskosten erforderlich, was sich letztlich so nachteilig auf den Abgabepreis des Fertigkompostes auswirkt, daß eine solche Anlage wirtschaftlich uninteressant wird.

Der Erfindung liegt die Aufgabe zugrunde, ein Verfahren zur Herstellung von Kompostmaterial ausgehend von gemischten Siedlungsabfällen und eine Anlage zum Durchführen dieses Verfahrens zu schaffen, die die vorerwähnten Nachteile nicht aufweisen, mit denen vielmehr möglichst ohne bewegliche Anlagenteile und ohne Personaleinsatz ein Maximum an Siedlungsabfällen zu einem qualitativ guten und preislich konkurrenzfähigen Kompostmaterial verarbeitet werden können. Ausgehend von einem Verfahren der eingangs genannten Art wird diese Aufgabe erfindungsgemäß dadurch gelöst, daß die Siedlungsabfälle in Form von verdichteten Ballen und/oder in Form eines fortlaufenden gepreßten Stranges zwangsläufig als neben- und wahlweise im Abstand übereinanderliegende Stränge verpreßt, vorzugsweise in die Rottehalle eingepreßt und nach Ablauf einer bestimmten Verweildauer durch verpreßes bzw. eingepreßtes, frisches Material weiterbefördert bzw. aus der Rottehalle ausgestoßen werden.

Das Verarbeiten der Siedlungsabfälle in verdichteter Form bietet sowohl den Vorteil eines um ein Mehrfaches größeren Materialdurchsatzes gegenüber lose aufgeschüttetem Material als auch insbesondere eine so hohe Festigkeit und Formbeständigkeit der Ballen oder Stränge, daß diese durch eine außerhalb der Rottehalle eingeleitete Druckkraft durch die Rottehalle weiterbefördert bzw. aus dieser ausgestoßen werden können, so daß man innerhalb der Rottehalle ohne störanfällige bewegliche Fördermittel auskommt. Die erfindungsgemäße Verfahrensweise führt somit bei vergleichsweise niedrigen Anlagen- und Betriebskosten zu einem hohen Materialdurchsatz. Dabei kann, wie der Lösungsvorschlag deutlich macht, im Falle der Anwendung des erfindungsgemäßen Verfahrens in Gegenden der Erde, in denen das ganze Jahr ideale Kompostierungstemperaturen und -luftfeuchtigkeit herrschen, auf eine der Klimatisierung dienende Rottehalle verzichtet bzw. diese offen gestaltet werden, ohne die mit der Erfindung überraschend erzielten Vorteile insgesamt zu schmälern. Somit sich auch die weiteren, nachfolgend dargelegten Vorschläge zur Ausgestaltung im Rahmen der Erfindung jeweils auch losgelöst vom Vorhandensein einer Rottehalle zu sehen.

Bei der Verarbeitung von strangförmig gepreßtem Material erweist es sich zur Erhöhung der Formbeständigkeit und Standfestigkeit eines Materialstranges als vorteilhaft, daß zumindest dem vorderen Strangende eines neu verpreßten bzw. eingepreßten Stranges zumindest ein verschnürter Ballen vorausgeschickt wird.

Zweckmäßigerweise wird auch das hintere Ende eines jeden Stranges durch mindestens einen verschnürten Ballen gebildet. Dadurch wird vermieden, daß das abschließende Strangende z. B. infolge Expansion oder Austrocknung abbröckelt, was zu Störungen führen kann.

Gemäß einer weiteren Ausbildung des erfindungsgemäßen Verfahrens kann die Formbeständigkeit des Stranges dadurch zusätzlich gesteigert werden, daß je nach Stranglänge ein oder mehrere verschnürte(r) Ballen zwischengeordnet wird bzw. werden.

In Anbetracht der jahreszeitlich unterschiedlichen Absatzmöglichkeiten des Kompostes in der Land- und Gartenwirtschaft kann es sich auch als zweckmäßig erweisen, das Abfallmaterial ausschließlich in Form von verschnürten Ballen in die Rottehalle einzupressen, um nach erfolgtem Rottevorgang das Kompostmaterial als Ballen außerhalb der Rottehalle auf einem Lagerplatz raumgünstig stapeln zu können.

Vorzugsweise wird die in der Rottehalle verfügbare Länge für einen Strang immer nur in Teilstrecken mit frischem Material nachgefüllt und dabei jeweils eine entsprechend lange Teilstrecke fertig kompostierten Materials ausgestoßen. Durch diese Maßnahme bietet sich die Möglichkeit, zunächst eine vergleichsweise kurze Teilstrecke des Stranges durch Austrocknen und Abbinden verfestigen zu lassen, so daß der Strang eine verbesserte Formbeständigkeit erhält, bevor ihm wieder neues Material hinzugefügt wird. Während der sich so ergebenden Ruhepause im Aufbau eines Stranges können die daneben oder darüber angeordneten Stränge weiter aufgebaut werden.

Die der Erfindung zugrundeliegende Aufgabe wird weiter durch eine Anlage zum Durchführen des erfindungsgemäßen Verfahrens gelöst, die aus einer Fördervorrichtung für das Material von einer Aufgabe- zu einer Abgabeseite, und zwar vorzugsweise einer geschlossenen, klimatisierten Rottehalle mit mindestens einer Einlaß- und einer Auslaßöffnung für das zu kompostierende Material besteht, wobei erfindungsgemäß in zwei einander gegenüberliegenden Seitenwänden der vorzugsweise geschlossenen Rottehalle eine Vielzahl von im Abstand neben- und wahlweise übereinanderliegenden Einlaß- und Auslaß-Öffnungen angeordnet sind, deren Querschnitt dem der zu kompostierenden Stränge entspricht, wobei jeweils eine Einlaß-Öffnung mit der zugehörigen Auslaß-Öffnung durch ortsfest installierte Führungsschienen für einen Strang verbunden ist, und den Einlaßöffnungen eine einzige, in Flucht mit jeder gewünschten Einlaßöffnung zu bringende Materialeinstoßvorrichtung zugeordnet ist. Auf dem Rotteplatz bzw. in der Rottehalle befinden sich somit lediglich zahlreiche Führungsschienen, die praktisch wartungsfrei sind. Je nach Größe der Anlage und vorgesehener Rottedauer, kann eine einzige Materialeinstoßvorrichtung zur Versorgung des gesamten Rotteplatzes bzw. der gesamten Rottehalle ausreichen.

Damit die Stränge möglichst intensiv mit dem Luftsauerstoff in Berührung kommen, sind die Führungsschienen im Abstand oberhalb vom Boden des Rotteplatzes bzw. der Rottehalle angeordnet.

In der bevorzugten Ausführungsform der Erfindung wird als Materialeinstoß-Vorrichtung eine die Ballen und/oder Stränge erzeugende Ballenpresse verwendet. Somit können in überraschend einfacher Weise sowohl die Preßfunktion als auch die Transportfunktion von einer einzigen Vorrichtung, und zwar auch gleichzeitig ausgeführt werden.

Damit die Ballenpresse von dem aggressiven Klima in der Rottehalle unbeeinflußt bleibt und auch zur Bedienung und Wartung gut zugänglich ist, ist sie gemäß einer Weiterbildung der Erfindung außerhalb der Rottehalle entlang der die Einlaßöffnungen enthaltenden Wand verfahrbar.

Eine zusätzliche Erweiterung des Einsatzbereiches der Ballenpresse auf mehrere übereinanderliegende Strangebene wird auf einfache Weise dadurch erreicht, daß die Ballenpresse auf einem heb- und senkbaren sowie horizontal verfahrbaren Untergestell befestigt ist.

Insbesondere für die Inbetriebnahme der erfindungsgemäßen Anlage im Falle des Arbeitens mit einer geschlossenen Rottehalle, aber auch für deren laufenden Betrieb, ist es zur Aufrechterhaltung des gewünschten Klimas von großer Bedeutung, daß die Rottehalle möglichst gut abgedichtet ist. Zu diesem Zweck ist an jeder Einlaß- und an jeder Auslaß-Öffnung vorzugsweise eine mittels der Ballen oder Stränge zu öffnende, selbstschließende Klappe angeordnet. Die Abdichtung kann im laufenden Betrieb aber auch dadurch erfolgen, daß das zu kompostierende Material selbst in Gestalt der Ballen oder Stränge zum Verschließen der Einlaß- oder Auslaß-Öffnungen verwendet wird.

Weitere Einzelheiten der Erfindung werden nachfolgend anhand eines in den Zeichnungen schematisch dargestellten Ausführungsbeispiels mit geschlossener Rottehalle näher erläutert. Es zeigt

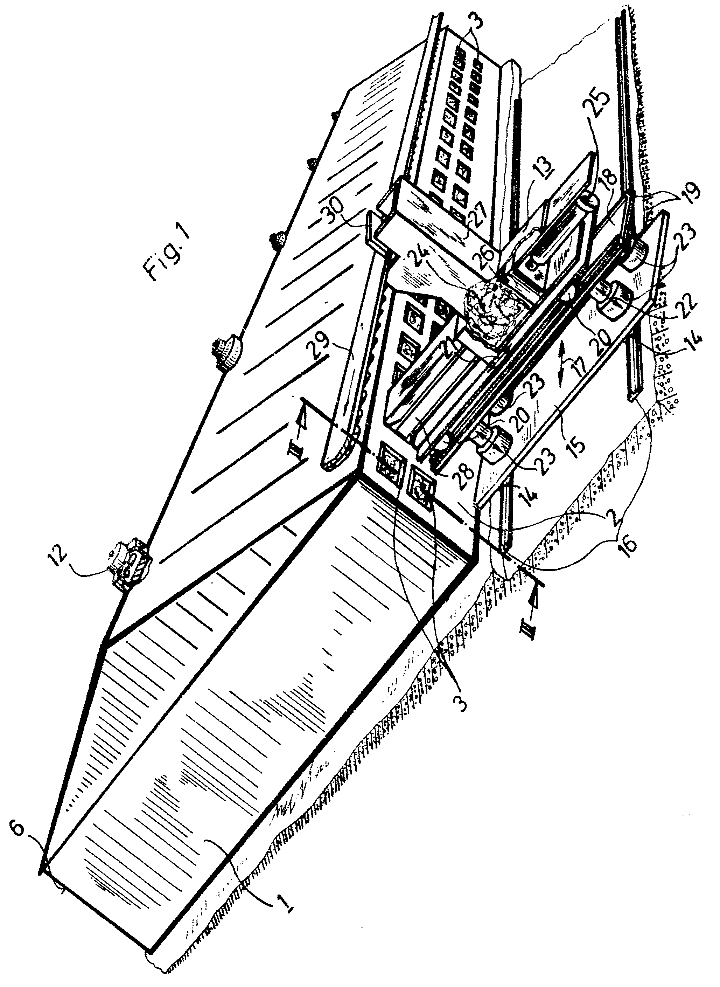

Fig. 1   eine perspektivische Ansicht einer Anlage zum Kompostieren von Abfällen,

Fig. 2 eine beschickungsseitig aufgeschnittene Rottehalle und

Fig. 3 einen Querschnitt durch die Rottehalle entlang der Linie III-III in Fig. 1.

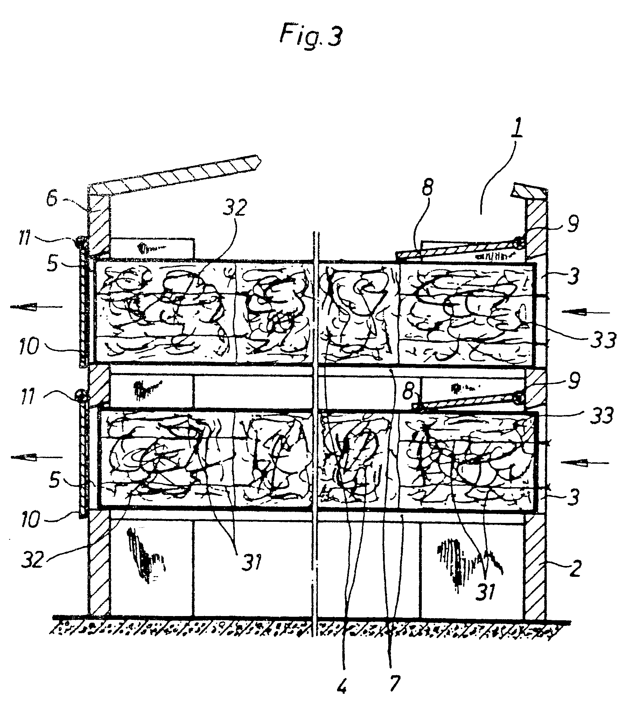

Eine Rottehalle 1 weist in einer Seitenwand 2 mehrere neben- und übereinander angeordnete Einlaßöffnungen 3 auf, deren Querschnitt demjenigen von in die Rottehalle einzuschiebenden Strängen 4 aus zu kompostierendem Material entspricht. Jeder Einlaßöffnung 3 ist eine damit fluchtende Auslaßöffnung 5 in der gegenüberliegenden Seitenwand 6 der Rottehalle zugeordnet. Die Einlaßöffnungen 3 sind mit den zugehörigen Auslaßöffnungen 5 durch ortsfest installierte Führungsschienen 7 für einen Strang 4 verbunden. Wie Fig. 3 zeigt, ist an der Innenseite der Seitenwand 2 über jeder Einlaßöffnung 3 eine Klappe 8 mittels eines Scharniergelenkes 9 schwenkbeweglich so angelenkt, daß sie beim Einstoßen eines Stranges 4 oder Ballens von diesem nach oben geschwenkt wird, ansonsten jedoch die Einlaßöffnung geschlossen hält. Entsprechend ist an der Außenseite der Seitenwand 6 über jeder Auslaßöffnung 5 eine Klappe 10 mittels eines Scharniergelenkes 11 so befestigt, daß sie von einem austretenden Strang 4 nach oben geschwenkt wird.

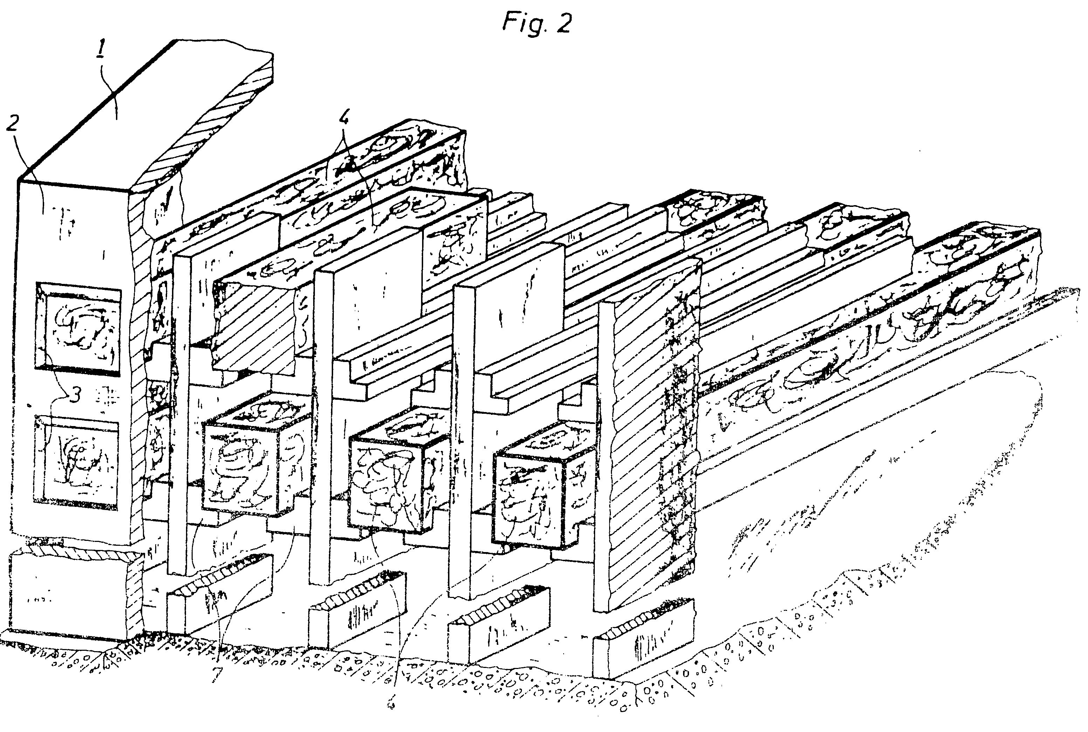

Auf dem Dach der Rottehalle 1 sind mehrere Ventilationskamine 12 angeordnet, deren Ventilatoren in regelmäßigen Zeitabständen eingeschaltet werden, um die Luft in der Rottehalle zu erneuern. Dabei können die Ventilationskamine sowohl zur Luftzufuhr als auch zur Luftabfuhr dienen. Natürlich kann der für den aeroben Kompostierungsprozeß erforderliche Sauerstoff auch auf eine andere geeignete Weise den Ballen und/oder Strängen zugeführt werden. Wie insbesondere aus Fig. 2 ersichtlich ist, sind die Stränge 4 in einem solchen Abstand voneinander gelagert, daß ein Maximum ihrer Oberfläche in unmittelbarer Berührung mit der Atmosphäre in der Rottehalle steht.

Das Beschicken der Rottehalle mit gepreßten Ballen und/oder Strängen aus Abfall, der vorher in bekannter Weise zerkleinert und mit Klärschlamm vermischt worden sein kann, geschieht vorzugsweise mit einer horizontalen Ballenpresse 13, die außerhalb der Rottehalle 1 entlang der Seitenwand 2 zu verfahren ist. Zu diesem Zweck steht die Ballenpresse mittelbar auf einem mit Rädern 14 versehenen Untergestell 15, das auf Schienen 16 mittels eines nicht gezeichneten Antriebes in Richtung des Pfeiles 17 hin und her bewegt werden kann. Zwischen der Ballenpresse und dem Untergestell 15 ist eine Plattform 18 mit rechtwinklig zu den Schienen 16 verlaufenden Schienen 19 angeordnet, auf denen die Ballenpresse über Räder 20 unter der Wirkung eines nicht gezeichneten Antriebes in Richtung des Pfeiles 21 hin und her verfahrbar ist, um an die Einlaßöffnungen 3 an- und von diesen ablegen zu können. Die Plattform 18 steht auf in Pfeilrichtung 22 heb- und senkbaren Säulen 23, so daß die Ballenpresse 13 ohne Schwierigkeiten in Flucht mit den auf unterschiedlichem Niveau befindlichen Einlaßöffnungen 3 gebracht werden kann.

Die Ballenpresse 13 besteht im wesentlichen aus einem Preßkasten 24, in dem ein mit einem hydraulischen Zylinderantrieb 25 verbundener Preßstempel 26 hin und her zu bewegen ist. In den Preßkasten 24 mündet von oben ein Füllschacht 27 ein, durch den das zu verpressende Material dem Preßkasten 24 zugeführt wird. An den Preßkasten schließt sich axial ein Preßkanal 28 an, der sich in Preßrichtung im Querschnitt verengt, so daß das zu verdichtende Material außer durch die axiale Preßkraft des Preßstempels auch durch die infolge der Preßkanalverengung entstehenden Seitenkräfte verdichtet wird. Das zu verpressende Material wird mit einem an der Dachkante der Rottehalle montierten Förderband 29 herangeführt, das so an der oberen Öffnung des Füllschachtes 27 vorbeigeführt ist, daß ein mit der Ballenpresse verfahrbarer Materialabstreifer 30 das ankommende Material in den Füllschacht umlenkt.

Nachfolgend wird anhand eines Beispiels die Arbeitsweise und Leistungsfähigkeit einer erfindungsgemäß gestalteten Anlage geschildert:

Die Rottehalle 1 sei etwa 100 m lang und 30 Meter breit, d. h., es sollen 30 Meter lange Stränge 4 mit einer Querschnittsabmessung von etwa 1 m × 1 m kompostiert werden. Als Material mag z. B. zerkleinerter, mit Klärschlamm vermischter Siedlungsabfall dienen, der in der Ballenpresse auf eine Dichte von 1000 kp/m³ verdichtet worden ist. Damit beim Einpressen eines Stranges aus diesem zunächst relativ feuchten Material dem vorderen Strangende eine etwas höhere Festigkeit und Formbeständigkeit verliehen wird, kann dieses gemäß Fig. 3 zweckmäßig durch einen mit Drähten 31 od. dgl. verschnürten Ballen 32 gebildet werden, der später auch den Verschluß der Auslaßöffnung 5 übernehmen kann. Entsprechend kann auch das hintere Ende eines Stranges 4 durch einen verschnürten Ballen 33 gebildet werden. Im Hinblick auf die vergleichsweise geringe Anfangsfestigkeit der Stränge 4 ist es vorteilhaft, die Rottehalle 1 zunächst nur mit halben Stranglängen, im vorliegenden Beispiel also mit 15 Meter langen Strängen 4, zu beschicken. Bei dieser Beschickungsart dauert es bei der beispielsweise gewählten Hallengröße, die in einer Lage etwa 65 Stränge nebeneinander und, gemäß den Zeichungsfiguren, zwei Lagen übereinander, also insgesamt 130 Stränge, aufzunehmen vermag, etwa 10 Tage, bis die Rottehalle in jeder Zeile mit halben Stranglängen gefüllt ist. In dieser Zeit ist in den zuerst eingepreßten Stranghälften der Kompostierungsprozeß so weit fortgeschritten, daß durch die dabei entstandene Erwärmung ein so hoher Feuchtigkeitsanteil ausgetrieben worden ist, daß die Stranghälften sowohl leichter als auch durch den Trocknungsprozeß fester und formbeständiger und damit die Transporteigenschaften erheblich günstiger geworden sind. In dieser Phase kann das Einpressen von Material fortgesetzt werden, bis der Anfangsballen 32 die Auslaßöffnung 5 in der in Fig. 3 gezeichneten Stellung erreicht. Nachdem nun auf diese Weise die Rottehalle 1 vollständig mit Materialsträngen gefüllt worden ist, sind für die zuerst eingepreßten Stranghälften etwa 20 Rottetage vergangen, so daß ein Fertigkompost entstanden ist, der durch Einpressen neuen Materials über die Auslaßöffnungen aus der Rottehalle ausgeschoben werden kann.

Wie das Beispiel zeigt, vermag eine Rottehalle der geschilderten Größe in 20 Tagen eine auf 1000 kp/m³ verdichtete Abfallmenge von 130 Strängen mit je 30 Metern Länge, entsprechend 3900 m³, entsprechend 3900 Mp Abfall aufzunehmen. Bei 18 möglichen Füllungen im Jahr (360 Tage) ergibt das einen Durchsatz von 70 200 m³/$_a$ entsprechend 70 200 000 kp/$_a$ Abfall. Erfahrungsgemäß sind in einem konsumorientierten Industrieland etwa 270 kp Abfall pro Einwohner und Jahr zu entsorgen. Etwa 50% dieser Abfallmenge, also etwa 135 kp Abfall pro Einwohner und Jahr sind kompostierbar. Die vorerwähnte Kapazität der beispielsweise geschilderten Anlage würde somit zur Beseitigung des kompostierbaren Abfallanteils von etwa 520 000 Einwohnern ausreichen. Im Vergleich zu der eingangs diskutierten Anlage nach dem Stand der Technik stellt die nach dem erfindungsgemäßen Verfahren arbeitende Anlage somit überraschend eine erheblich einfachere und günstigere Lösung dar.

**Patentansprüche**

1. Verfahren zur Herstellung von Kompostmaterial durch aerobe Behandlung und Entseuchung von gemischten Siedlungsabfällen, wobei die Abfälle in Form von eng benachbart zueinander angeordneten Preßlingen für eine bestimmte Verweildauer in eine Rottehalle eingebracht werden, dadurch gekennzeichnet, daß die Siedlungsabfälle in Form von verdichteten Ballen und/oder in Form eines fortlaufenden, gepreßten Stranges zwangsläufig als neben- und wahlweise im Abstand übereinanderliegende Stränge in die vorzugsweise geschlossene, klimatisierte Rottehalle eingepreßt und nach Ablauf einer durch den Rottevorgang bestimmten Verweildauer durch verpreßtes bzw. eingepreßtes, frisches Material durch die Rottehalle weiterbefördert und aus derselben ausgestoßen werden.

2. Verfahren nach Anspruch 1, dadurch gekennzeichnet, daß beim Einsatz eines forlaufenden gepreßten Stranges zumindest dem vorderen Strangende wenigstens ein verschnürter Ballen vorausgeschickt wird.

3. Verfahren nach Anspruch 1 oder 2, dadurch gekennzeichnet, daß beim Einsatz eines fortlaufenden gepreßten Stranges das hintere Ende eines jeden Stranges durch mindestens einen verschnürten Ballen gebildet wird.

4. Verfahren nach einem oder mehreren der Ansprüche 1 bis 3, dadurch gekennzeichnet, daß beim Einsatz eines fortlaufenden gepreßten Stranges je nach Stranglänge ein oder mehrere verschnürte(r) Ballen zwischengeordnet wird bzw. werden.

5. Verfahren nach Anspruch 1, dadurch gekennzeichnet, daß beim Einsatz eines fortlaufenden gepreßten Stranges die in der Rottehalle verfügbare Länge für einen Strang immer nur in Teilstrecken mit frischem Material nachgefüllt und dabei jeweils eine entsprechend lange Teilstrecke fertig kompostierten Materials ausgestoßen wird.

6. Anlage zum Durchführen des Verfahrens gemäß einem oder mehreren der Ansprüche 1 bis 5, bestehend aus einer Fördervorrichtung für das Material von einer Aufgabe- zu einer Abgabeseite und vorzugsweise einer geschlossenen Rottehalle (1) mit mindestens einer Einlaß- (3) und einer Auslaßöffnung (5) für das zu kompostierende Material (4), dadurch gekennzeichnet, daß in zwei einander gegenüberliegenden Seitenwänden (2, 6) der vorzugsweise geschlossenen Rottehalle (1) eine Vielzahl von im Abstand neben- und wahlweise übereinanderliegenden Einlaßöffnungen (3) und Auslaßöffnungen (5) angeordnet sind, deren Querschnitt dem der zu kompostierenden Stränge (4) entspricht, wobei jeweils eine Einlaßöffnung (3) mit der zugehörigen Auslaßöffnung (5) durch ortsfest installierte Führungsschienen (7) für einen Strang (4) verbunden ist, und den Einlaßöffnungen (3) eine einzige, in Flucht mit jeder gewünschten Einlaßöffnung zu bringende Materialeinstoßvorrichtung zugeordnet ist.

7. Anlage nach Anspruch 6, dadurch gekennzeichnet, daß die Führungsschienen (7) im Abstand oberhalb vom Boden der Rottehalle (1) angeordnet sind.

8. Anlage nach Anspruch 6 oder 7, gekennzeichnet durch eine die Ballen (32, 33) und/oder Stränge (4) erzeugende Ballenpresse (13) als Materialeinstoßvorrichtung.

9. Anlage nach Anspruch 8, dadurch gekennzeichnet, daß die Ballenpresse (13) außerhalb der Rottehalle (1) entlang der die Einlaßöffnungen (3) enthaltenden Seitenwand (2) verfahrbar ist.

10. Anlage nach Anspruch 9, dadurch gekennzeichnet, daß die Ballenpresse (13) auf einem heb- und senkbaren sowie horizontal verfahrbaren Untergestell (15) befestigt ist.

11. Anlage nach einem oder mehreren der Ansprüche 6 bis 10, gekennzeichnet durch je eine mittels der Ballen oder Stränge zu öffnende, selbstschließende Klappe (8, 10) an jeder Einlaß- (3) und an jeder Auslaßöffnung (5).

12. Anlage nach einem oder mehreren der Ansprüche 6 bis 11, dadurch gekennzeichnet, daß das zu kompostierende Material selbst in Gestalt der Ballen (32, 33) oder Stränge (4) zum Verschließen der Einlaß- (3) und/oder Auslaßöffnungen (5) verwendet wird.

## Claims

1. Method for producing compost material by aerobic composting and desinfecting of mixed town refuse, whereby the refuse, in the form of briquets tightly packed together, is stored for a specific period of time in a rotting chamber, characterised in that the town refuse in the form of compressed bales and/or in the form of continuously pressed extrusions necessarily arranged side by side and optionally arranged at a distance above one another, is pressed into the preferably enclosed air conditioned rotting chamber and after completion of a storage period, determined by the rotting process, is further conveyed through the rotting chamber by compressed or pressed-in fresh material, and expelled from the same.

2. Method according to claim 1, characterised in that in case of a continuously pressed extrudate at least the leading end of the extrudate is preceded by at least one tied-up bale.

3. Method according to claim 1 or 2, characterised in that in case of a continuously pressed extrudate the rearward end of each extrudate is formed by at least one tied-up bale.

4. Method according to one or more of claims 1 to 3, characterised in that in case of a contisuously pressed extrudate at least one tied-up bale, is interposed, depending on the length of one extrudate.

5. Method according to claim 1, characterised in that in case of a continuously pressed extrudate the length available in the rotting chamber for one length to be produced is replaced with fresh material only in partial stretches, and only a correspondingly long partial stretch of already composted material, respectively, is expelled.

6. Arrangement for effecting the method according to at least one of the above claims 1 to 5, comprising of a conveying device for the material from an input end to a discharge end and preferably a closed rotting chamber (1) having at least one inlet (3) and one outlet opening (5) for the material (4) to be composted, characterised in that in two oppositely arranged side walls (2, 6) of the preferably enclosed rotting chamber (1) there are provided a plurality of inlet openings (3) and outlet openings (5) spaced apart side by side and optionally one above another, the crosssections of which openings correspond to the diameter of the extrudate to be composted, whereby respectively one inlet opening (3) is linked with the associated outlet opening (5) by means of permanently fixed guide rails (7) for an extrudate (4), and the inlet openings (3) are provided with a single material charging device to be brought into alignment with each required inlet opening.

7. Arrangement according to claim 6, characterised in that the guide-rails (7) are arranged at a distance from the floor of the rotting chamber (1).

8. Arrangement according to claim 6 or 7 characterized by a bale press (13) acting as the material charging device for producing the bales (32, 33) and/or extrudate (4).

9. Arrangement according to claim 8, characterised in that the bale press (13) can travel outside the rotting chamber (1) along the side wall (2) containing the inlet openings (3).

10. Arrangement according to claim 9, characterised in that the bale press (13) is attached to an up and downward moveable sub-frame (15) which can also travel horizontally.

11. Arrangement according to at least one of the claims 6 to 10, characterised by a self-closing flap (8, 10), which is opened by the bales or extrudates, arranged at each inlet opening (3) and outlet opening (5).

12. Arrangement according to at least one of the claims 6 to 10, characterised in that the material to be composted itself is used in the shape of the bales (32, 33) or the extrudates (4) for closing the inlet openings (3) and/or outlet openings (5).

## Revendications

1. Procédé de fabrication de matière compostée par traitement aérobie et stérilisation de détritus d'agglomérations mélangés, selon lequel ces détritus, sous forme de moulages à la presse disposés étroitement voisins les uns des autres, sont introduits dans un hall de pourrisement, remarquable en ce que les détritus de citésjardins, sous forme de balles comprimées et/ou sous forme d'un boudin continu extrudé, sont introduits à la presse dans le hall de pourrissement climatisé, de préférence fermé, en tant que boudins juxtaposés et, sélectivement, de boudins superposés avec un intervalle entre eux, puis sont, à la fin d'un temps de séjour déterminé par le processus de porrissement, avancés dans le hall et éjectés de celui-ci par un apport de matière fraîche comprimée ou introduite à la presse.

2. Procédé selon la revendication 1, remarquable en ce que lorsque l'on met en oeuvre un boudin continu extrudé, au moins une balle cerclée est envoyée en tête d'au moins l'extrémité avant de ce boudin.

3. Procédé selon la revendication 1 ou 2, remarquable en ce que lorsque l'on met en oeuvre un boudin continu extrudé. on forme l'extrémité arrière de chaque boudin par au moins une balle cerclée.

4. Procédé selon une ou plusieurs des revendications 1 à 3, remarquable en ce que lorsque l'on met en oeuvre un boudin continu extrudé on intercale, suivant la longueur de ce boudin, une ou plusieurs balles cerclées.

5. Procédé selon la revendication 1, remarquable en ce que lorsque l'on met en oeuvre un boudin continu extrudé la longueur disponible dans le hall de pourrissement pour un boudin n'est toujours approvisionnée en matière fraîche que par tronçons partiels en même temps qu'est éjecté un tronçon partiel, de longueur correspondante, de matière finie transformée en compost.

6. Installation pour la mise en oeuvre du procédé selon une ou plusieurs des revendications 1 à 5, composé d'un dispositif pour transporter la matière entre un côté alimentation et un côté décharge et de préférence d'un hall de pourrissement fermé (1) avec au moins une ouverture d'admission (3) et une ouverture de sortie (5) pour la matière à transformer en compost, remarquable en ce que dans deux parois latérales se faisant face (2, 6) du hall de pourrissement de préférence fermé (1) sont disposées un grand nombre d'ouvertures distantes les unes des autres, côte à côte et, sélectivement, superposées, dont la section correspond à celui du boudin à transformer en compost, chaque ouverture d'admission (3) étant reliée à l'ouverture d'évacuation correspondante (5) par des rails de guidage pour un boudin (4) installés fixes, et en ce qu'aux ouvertures d'admission (3) est affecté un unique dispositif d'introduction de matière destiné à être placé en ligne avec chaque ouverture d'admission désirée.

7. Installation selon la revendication 6, remarquable en ce que les rails de guidage (7) sont disposés à distance au-dessus du fond du hall de pourrissement (1).

8. Installation selon la revendication 6 ou 7, remarquable en ce que le dispositif d'introduction de matière est une presse à balles (13) qui produit des balles (32, 33) et/ou des boudins (4).

9. Installation selon la revendication 8, remarquable en ce que la presse à balles (13) est déplaçable hors du hall de pourrissement (1) le long de la paroi latérale (2) qui contient les ouvertures d'admission (3).

10. Installation selon une ou plusieurs des revendications 6 à 10, remarquable en ce que la presse à balles (13) est fixée sur un châssis inférieur (15) qui peut être soulevé et abaissé ainsi que déplacé horizontalement.

11. Installation selon une ou plusieurs des revendications 6 à 10, remarquable en ce qu'elle comporte, à chaque ouverture d'admission (3) et à chaque ouverture d'évacuation (5), un volet à fermeture automatique (8, 10) conçu pour être ouvert au moyen des balles ou des boudins.

12. Installation selon une ou plusieurs des revendications 6 à 11, remarquable en ce que la fermeture des ouvertures d'admission (3) et/ou d'évacuation (5) est assurée par la matière même à transformer en compost, sous forme des balles (32, 33) ou boudins (4).

Fig. 1

Fig. 2

## Fig. 3